(19) Europäisches Patentamt
European Patent Office
Office européen des brevets

(11) EP 4 352 153 B1

(12) # FASCICULE DE BREVET EUROPEEN

(45) Date de publication et mention de la délivrance du brevet:
**02.07.2025 Bulletin 2025/27**

(21) Numéro de dépôt: **22733691.4**

(22) Date de dépôt: **30.05.2022**

(51) Classification Internationale des Brevets (IPC):
***C08L 9/00*** *(2006.01)* ***B65G 15/32*** *(2006.01)*

(52) Classification Coopérative des Brevets (CPC):
**C08L 9/00; B65G 15/36**

(86) Numéro de dépôt international:
**PCT/FR2022/051013**

(87) Numéro de publication internationale:
**WO 2022/258905 (15.12.2022 Gazette 2022/50)**

(54) **COMPOSITION DE CAOUTCHOUC A BASE D'ÉLASTOMÈRE FORTEMENT SATURÉ ET DE COMPOLYMÈRE DE BUTADIENE-STYRENE**

KAUTSCHUKZUSAMMENSETZUNG AUS STARK GESÄTTIGTEM ELASTOMER UND BUTADIEN-STYROL COPOLYMER

RUBBER COMPOSITION OF STRONGLY SATURATED ELASTOMER AND BUTADIENE-STYRENE COPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2021 FR 2105949**

(43) Date de publication de la demande:
**17.04.2024 Bulletin 2024/16**

(73) Titulaire: **COMPAGNIE GENERALE DES ETABLISSEMENTS MICHELIN**
**63000 Clermont-Ferrand (FR)**

(72) Inventeurs:
- **FLEURY, Etienne**
**63040 CLERMONT-FERRAND Cedex 9 (FR)**
- **HIDROT, Jean-Denis**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 2 767 551**
**EP-A1- 3 822 312**
**EP-A2- 0 877 053**
**JP-A- 2013 155 214**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention est relative à des bandes transporteuses présentant des propriétés mécaniques améliorées.

Les bandes transporteuses, également appelées courroies transporteuses ou bandes de convoiement, sont essentiellement constituées d'une bande sans fin et sont généralement supportées et entraînées par des poulies motorisées. Elles permettent ainsi de transporter des matériaux ou des marchandises sur des distances plus ou moins longues, pouvant aller jusqu'à plusieurs kilomètres.

Dans le secteur minier et dans celui des carrières notamment, les bandes transporteuses sont amenées à réceptionner de grosses quantités de minerai, cailloux, roches, etc., souvent de manière brutale. Elles doivent donc présenter d'excellentes propriétés mécaniques, et ce, le plus longtemps possible pour maximiser leur durée de vie. L'allongement rupture est une propriété mécanique particulièrement importante à considérer compte tenu des déformations subies par la bande transporteuse lorsqu'elle réceptionne de lourdes charges qui peuvent présenter des indentations agressives, telles que de la roche.

Il est donc important de disposer de bandes transporteuses dont la composition de caoutchouc présente de bonnes propriétés mécaniques, notamment l'allongement rupture. Il est également souhaitable que ces propriétés mécaniques soient maintenues le plus longtemps possible pour améliorer la durée de vie de ces bandes transporteuses.

Dans ce but, le document WO 2017/019235 A1 propose des compositions de caoutchouc pour bandes transporteuses à base d'un mélange de caoutchouc styrène-butadiène (SBR) et de caoutchouc EPDM (éthylène-propylène-diène monomère).

Par ailleurs, les bandes transporteuses doivent répondre à d'autres exigences telles qu'une bonne résistance à l'abrasion et une bonne résistance à la propagation de fissures. Ces deux propriétés permettent, à l'instar du maintien des propriétés mécaniques, d'augmenter la durée de vie des bandes transporteuses comprenant une composition de caoutchouc.

Or, il demeure toujours intéressant pour les industriels de disposer de compositions permettant d'améliorer davantage le compromis des performances précitées et ainsi disposer de bandes transporteuses ayant une durée de vie la plus longue possible .

Poursuivant ses recherches, la Demanderesse a découvert de façon inattendue que la combinaison d'un caoutchouc styrène-butadiène et d'un élastomère spécifique à base d'éthylène et de 1,3-diène, les unités éthylène dans le copolymère représentant plus de 50% en mole des unités monomères du copolymère, permet d'améliorer le compromis de performances précitées.

Ainsi l'invention a pour objet une composition de caoutchouc au moins à base de 10 à 90 pce d'un caoutchouc styrène-butadiène (SBR) et de 10 à 90 pce d'un copolymère d'éthylène et de 1,3-diène, les unités éthylène dans le copolymère d'éthylène et de 1,3-diène représentant plus de 50% en mole des unités monomères du copolymère d'éthylène et de 1,3-diène, d'une charge et d'un système de réticulation, et présentant un bon compromis de performance entre la résistance à la propagation de fissures et l'allongement rupture

L'invention concerne également des articles en caoutchouc comprenant une composition selon l'invention, en particulier une bande transporteuse comprenant une composition en caoutchouc selon l'invention.

## I- DÉFINITIONS

Par l'expression « à base de » utilisée pour définir les constituants d'un système catalytique ou d'une composition, on entend le mélange de ces constituants, ou le produit de la réaction d'une partie ou de la totalité de ces constituants entre eux, au moins partiellement, lors des différentes phases de fabrication du système catalytique ou de la composition. Dans le cas d'une composition, celle-ci peut ainsi être à l'état totalement ou partiellement réticulé ou à l'état non-réticulé.

Par « matrice élastomère », on entend l'ensemble des élastomères de la composition, y compris le copolymère d'éthylène et de 1,3-diène défini ci-dessous.

Par l'expression « partie en poids pour cent parties en poids d'élastomère » (ou pce), il faut entendre au sens de la présente invention, la part, en masse pour cent parties d'élastomère présent dans la composition de caoutchouc considérée.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Dans la présente demande, on entend par « l'ensemble des unités monomères du copolymère » ou « la totalité des unités monomères du copolymère » tous les motifs de répétitions constitutifs du copolymère qui résultent de l'insertion des monomères dans la chaîne copolymère par polymérisation. Sauf indication contraire, les teneurs en une unité monomère ou motif de répétition dans le copolymère d'éthylène et de 1,3-diène sont données en pourcentage molaire calculé sur la base de l'ensemble des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » décrite dans la présente sont mesurées de manière connue par DSC (Differential Scanning Calorimetry) selon la norme ASTM D3418 (1999).

## II- BREVE DESCRIPTION DES FIGURES

[Fig 1] La Figure 1 représente un schéma d'une coupe transversale d'une bande transporteuse.

## III- DESCRIPTION DE L'INVENTION

### III-1 Matrice élastomère

La composition de caoutchouc selon l'invention a comme caractéristique essentielle de comprendre de 10 à 90 pce d'un caoutchouc styrène-butadiène (SBR) et de 90 à 10 pce d'un copolymère d'éthylène et de 1,3-diène, les unités éthylène dans le copolymère représentant plus de 50% en mole des unités monomères du copolymère. Dans la présente, le « copolymère d'éthylène et de 1,3-diène, les unités éthylène dans le copolymère représentant plus de 50% en mole des unités monomères du copolymère » pourra être désigné par l'expression « copolymère d'éthylène et de 1,3-diène » pour un souci de simplification de rédaction.

On notera que le SBR peut être préparé en émulsion (ESBR) ou en solution (SSBR). Parmi les SBR utilisables dans le cadre de la présente invention, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%. Avantageusement, le caoutchouc styrène-butadiène est un SBR présentant une teneur en styrène comprise entre 5% et 60%, de préférence de 6% à 30%, en poids par rapport au poids total du copolymère, et une teneur (% molaire) en liaisons -1,2 de la partie butadiénique comprise entre 4% et 75%, de préférence entre 15% et 30%. On peut utiliser, dans le cadre de la présente invention, par exemple le SBR « KER1502 » de la société Synthos.

Avantageusement, la masse molaire moyenne en nombre (Mn) du caoutchouc styrène-butadiène est comprise dans un domaine allant de 40 000 à 400 000 g/mol, de préférence de 50 000 à 250 000 g/mol.

Le SBR peut être constitué d'un mélange de caoutchoucs styrène-butadiène qui se différencient les uns des autres par leurs microstructures et/ou par leurs macrostructures.

Par « copolymère d'éthylène et de 1,3-diène », on entend tout copolymère dont les unités monomères sont celles résultant de la polymérisation de l'éthylène et d'un 1,3-diène. Le copolymère d'éthylène et de 1,3-diène résulte donc de la polymérisation des seuls monomères que sont l'éthylène et le 1,3-diène.

De manière connue, l'expression « unité éthylène » fait référence au motif $-(CH_2-CH_2)-$résultant de l'insertion de l'éthylène dans la chaîne élastomère.

De manière connue, l'expression « unité 1,3-diène » fait référence aux unités résultant de l'insertion du 1,3-diène

par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant 4 à 12 atomes de carbone, tels que tout particulièrement le 1,3-butadiène et l'isoprène. De préférence, le 1,3-diène est le 1,3-butadiène.

Avantageusement, les unités éthylène dans le copolymère d'éthylène et de 1,3-diène représentent entre 50% et 95%, de préférence entre 55% et 90%, en mole des unités monomères du copolymère.

Le copolymère d'éthylène et d'un 1,3-diène contient avantageusement des unités de formule (I) et/ou (II). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

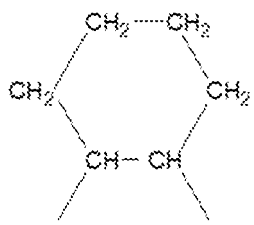

(I)

$-CH_2-CH(CH=CH_2)-$ (II)

Par exemple, le copolymère d'éthylène et d'un 1,3-diène peut être dépourvu d'unités de formule (I). Dans ce cas, il contient de préférence des unités de formule (II).

Lorsque le copolymère d'éthylène et d'un 1,3-diène comprend des unités de formule (I) ou des unités de formule (II) ou encore des unités de formule (I) et des unités de formule (II), les pourcentages molaires des unités de formule (I) et des unités de formule (II) dans le copolymère, respectivement o et p, satisfont de préférence à l'équation suivante (eq. 1), de manière plus préférentielle à l'équation (eq. 2), o et p étant calculés sur la base de l'ensemble des unités monomères du copolymère.

$$0 < o+p \leq 25 \qquad \text{(eq. 1)}$$

$$0 < o+p < 20 \qquad \text{(eq. 2)}$$

Avantageusement également, le copolymère d'éthylène et de 1,3-diène présente une cristallinité inférieure à 20%, plus avantageusement inférieure à 15%, encore plus avantageusement inférieure à 10%. Les techniques utilisées pour la détermination des fractions molaires, des masses molaires moyennes (Mn), des températures de transitions vitreuses et de la cristallinité sont décrites ci-après dans les exemples.

Selon l'invention, le copolymère d'éthylène et d'un 1,3-diène (de préférence de 1,3-butadiène), est un copolymère statistique.

Avantageusement, la masse moyenne en nombre (Mn) du copolymère d'éthylène et de 1,3-diène, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

Le copolymère d'éthylène et de 1,3-diène peut être obtenu selon différentes méthodes de synthèse connues de l'homme du métier, notamment en fonction de la microstructure visée du copolymère. Généralement, il peut être préparé par copolymérisation d' au moins un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère d'éthylène et de 1,3-diène, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère d'éthylène et de 1,3-diène peut être constitué d'un mélange de copolymères d'éthylène et de 1,3-diène qui se différencient les uns des autres par leurs microstructures et/ou par leurs macrostructures.

Avantageusement, le taux du caoutchouc styrène-butadiène dans la composition selon l'invention, est compris dans un domaine allant de 20 à 80 pce, de préférence de 30 à 70 pce, et le taux du copolymère d'éthylène et de 1,3-diène dans la composition selon l'invention, est compris dans un domaine allant de 20 à 80 pce, de préférence de 30 à 70 pce.

Avantageusement, la somme du taux du copolymère d'éthylène et de 1,3-diène et du taux du caoutchouc styrène-butadiène est supérieure à 50 pce, de préférence supérieur à 75 pce, de préférence encore supérieur à 90 pce. Avantageusement, le caoutchouc styrène-butadiène et le copolymère d'éthylène et de 1,3-diène sont les seuls élastomères de la composition, c'est-à-dire que leur taux dans la composition est de 100 pce.

La matrice élastomère peut avantageusement comprendre uniquement, à titre d'élastomère, le caoutchouc styrène-butadiène et le copolymère d'éthylène et de 1,3-diène.

La matrice élastomère de la composition selon l'invention peut alternativement comprendre en outre un élastomère diénique différent du caoutchouc styrène-butadiène et du copolymère d'éthylène et de 1,3-diène (également appelé dans la présente « l'autre élastomère »).

L'autre élastomère de la matrice élastomère du pneumatique selon l'invention est choisi préférentiellement dans le groupe des élastomères diéniques fortement insaturés tels que les polybutadiènes (en abrégé "BR"), les polyisoprènes (IR) de synthèse, le caoutchouc naturel (NR), les copolymères de butadiène autre que SBR, les copolymères d'isoprène et les mélanges de ces élastomères. On entend en général par "élastomère diénique fortement insaturé", un élastomère diénique issu au moins en partie de monomères diènes conjugués, ayant un taux de motifs ou unités d'origine diénique (diènes conjugués) qui est supérieur à 50% (% en moles).

Le taux de l'autre élastomère, dans la composition selon l'invention, peut être compris dans un domaine allant de 0 à 20 pce, de préférence de 0 à 10 pce, de préférence de 0 à 5 pce. De préférence encore la matrice élastomère ne comprend pas d'autre élastomère que le caoutchouc styrène-butadiène et le copolymère d'éthylène et de 1,3-diène, c'est-à-dire que le taux de l'autre élastomère est de 0 pce.

III-2 Charge

La composition selon l'invention a également comme caractéristique essentielle d'être à base d'une charge renforçante.

A titre d'exemples de charges connues comme renforçantes par l'homme du métier, on citera notamment du noir de carbone ou une charge inorganique renforçante telle que la silice en présence d'un agent de couplage, ou un coupage de ces deux types de charge. En effet, de manière connue, la silice est une charge renforçante en présence d'un agent de couplage lui permettant de se lier à l'élastomère. De préférence, la charge renforçante est de taille moyenne en poids inférieure à 500 nm, notamment entre 20 et 200 nm).

Selon l'invention, la charge renforçante comprend avantageusement du noir de carbone, de la silice ou un de leurs mélanges. De préférence, la charge renforçante comprend plus de 50% en poids, de préférence plus de 80% en poids de noir de carbone. De préférence encore la charge renforçante est exclusivement constituée de noir de carbone, c'est-à-dire que le noir de carbone représente 100% en poids de la charge renforçante.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange-maître (« masterbatch » en anglais) (voir par exemple demandes WO97/36724-A2 ou WO99/16600-A1).

Parmi les noir de carbone précité, ceux présentant une surface spécifique BET comprise dans un domaine allant de 60 à 160 $m^2/g$ sont particulièrement préférés.

Ainsi, de préférence, la charge renforçante comprend plus de 50% en poids, de préférence plus de 80% en poids, d'au moins un noir de carbone présentant une surface spécifique BET comprise dans un domaine allant de 60 à 160 $m^2/g$, de préférence de 70 à 130 $m^2/g$, de préférence de 100 à 120 $m^2/g$. La surface spécifique BET des noirs de carbone est mesurée selon la norme ASTM D6556-10 [méthode multipoints (au minimum 5 points) - gaz : azote - domaine de pression relative P/P0 : 0.1 à 0.3].

Comme silices conviennent tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou

agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, lorsqu'ils sont utilisés, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Lorsque qu'un agent de couplage de la silice à l'élastomère est utilisé, la teneur en agent de couplage peut aisément être ajustée par l'homme du métier. Typiquement le taux d'agent de couplage représente de 0,5% à 15% en poids par rapport à la quantité de silice.

Le taux de charge renforçante peut facilement être ajusté par l'homme du métier en fonction de l'usage de la composition de caoutchouc. Avantageusement, le taux de charge renforçante, dans la composition selon l'invention, est compris dans un domaine allant de 10 à moins de 100 pce, de préférence de 15 à 90 pce, de préférence encore de 20 à 75 pce. Plus particulièrement, le taux de charge renforçante, dans la composition selon l'invention, est compris dans un domaine allant de 10 à moins de 49 pce, de préférence de 15 à 48 pce, de préférence encore de 20 à 47 pce.

Avantageusement, la fraction volumique charge dans la composition selon l'invention est inférieure à 19, de préférence est comprise dans un domaine allant de 10% à moins de 19%, de préférence de 11% à 18%, de préférence encore de 12% à 17%. La fraction volumique de charge dans une composition de caoutchouc est définie comme étant le rapport du volume de la charge sur le volume de l'ensemble des constituants de la composition, étant entendu que le volume de l'ensemble des constituants est calculé par en additionnant le volume de chacun des constituants de la composition.

## III-3 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire et/ou d'au moins agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

## III-4 Système plastifiant

La composition de caoutchouc selon l'invention peut comprendre un système plastifiant, mais cela n'est pas obligatoire.

Par exemple, la composition de caoutchouc de la bande transporteuse peut ne pas comprendre de plastifiant liquide à 23°C, ou en comprendre moins de 40 pce, de préférence moins de 30 pce.

Avantageusement, la composition de caoutchouc de la bande transporteuse comprend un plastifiant liquide à 23°C, de préférence à taux compris dans un domaine allant de plus de 0 à moins de 40 pce, de préférence de 2 à 30 pce, de préférence de 3 à 20 pce .

Le plastifiant liquide à 23°C peut être choisi dans le groupe constitué par les huiles naphténiques (à basse ou haute viscosité, notamment hydrogénées ou non), les huiles paraffiniques, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges. De préférence, le plastifiant liquide à 23°C est choisi dans le groupe constitué par les huiles MES, les huiles TDAE, les huiles naphténiques, les huiles végétales et leurs mélanges.

Les plastifiant liquides sont dits à « basse Tg », c'est-à-dire qu'ils présentent une Tg qui est de préférence inférieure à -20°C, de préférence inférieur à -40°C

Par ailleurs, la composition de caoutchouc ne comprend de préférence pas de résine plastifiante hydrocarbonée (ou résine plastifiante) ou en comprend moins de 10 pce, de préférence moins de 5 pce. De manière particulièrement avantageuse, la composition de caoutchouc ne comprend pas de résine plastifiante hydrocarbonée. La dénomination « résine » est connue de l'homme du métier comme étant composé qui est solide à température ambiante (23°C), par opposition à un composé plastifiant liquide tel qu'une huile. Les résines plastifiantes ont été décrites par exemple dans l'ouvrage intitulé *"Hydrocarbon Resins"* de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").*

III-5 Additifs possibles

La composition de caoutchouc selon l'invention peut comporter optionnellement également tout ou partie des additifs usuels habituellement utilisés dans les compositions d'élastomères, par exemple pour bande transporteuse, comme par exemple des agents de protection tels que cires anti-ozone, anti-ozonants chimiques, antioxydants, des agents anti-fatigue, etc.

III-6 Article en caoutchouc

La présente invention a également pour objet un article de caoutchouc comprenant une composition selon l'invention.

Compte tenu du compromis de performances amélioré dans le cadre de la présente invention, l'article de caoutchouc est avantageusement choisi dans le groupe constitué par les bandages pneumatiques, les bandages non pneumatiques, les chenilles et les bandes transporteuses.

Plus particulièrement, l'invention a pour objet une bande transporteuse comprenant une composition de caoutchouc selon l'invention. La bande transporteuse peut être tout type de bande transporteuse comprenant une composition de caoutchouc.

De manière simplifiée, en référence à la Figure 1, une bande transporteuse (1) comprend une couche de chargement (2), une couche de renforcement (3) et une couche d'entrainement (4). Classiquement, la couche de renforcement (3) est située entre la couche de chargement (2) et la couche d'entrainement (4).

Une couche de chargement de bande transporteuse peut être définie comme étant la couche de la bande transporteuse sur laquelle sont réceptionnés les chargements de tous types, par exemple des biens de consommations, des matériaux tels que de la roches, des cailloux ou du minerai, etc. Une couche de renforcement de bande transporteuse peut être définie comme étant une couche permettant de renforcer la bande transporteuse, notamment en limitant sa déformation. Une couche d'entrainement de bande transporteuse, également appelée couche de couverture de poulie, peut être définie comme étant la couche entrainée par tout moyen mécanique, par exemples des poulies ou des engrenages motorisés.

La couche de renforcement (3) peut comprendre une pluralité d'éléments de renforcement en acier (5), tels que des câbles en acier, qui sont noyés dans la matrice élastomère (6) de la couche de renforcement (3). La couche de renforcement (3) alternativement être constituée d'une ou plusieurs couches de renforcement en tissu (non représentée).

La bande transporteuse (1) peut en outre comprendre une ou plusieurs autres couches qui peuvent être située entre la couche de chargement (2) et la couche de renforcement (4) et/ou entre la couche de renforcement (3) et la couche d'entrainement (4).

La composition selon l'invention est particulièrement bien adaptée pour constituer la couche de chargement (2) de la bande transporteuse (1).

Ainsi, la bande transporteuse (1) comprend préférentiellement au moins une couche de chargement (2), une couche de renforcement (3) et une couche d'entrainement (4), dans laquelle la couche de chargement (2) est constituée d'une composition de caoutchouc selon l'invention.

L'invention a également pour objet particulier un bandage pneumatique ou non pneumatique pourvu d'une bande de roulement comprenant une composition selon l'invention.

La bande de roulement présente une surface de roulement pourvue d'une sculpture formée par une pluralité de rainures délimitant des éléments en relief (blocs, nervures) de façon à générer des arêtes de matière ainsi que des creux. Ces rainures représentent un volume de creux qui, rapporté au volume total de la bande de roulement (incluant à la fois le volume d'éléments en relief et celui de toutes les rainures) s'exprime par un pourcentage désigné dans la présente par "taux de creux volumique". Un taux de creux volumique égal à zéro indique une bande de roulement sans rainure ni creux.

La présente invention est particulièrement bien adaptée aux bandes de roulement de bandages destinés à équiper des véhicules roulant sur des sol non-bitumeux dits « hors la route ». De préférence, le bandage est un bandage pour véhicule hors la route choisi dans le groupe constitué par les véhicules de génie civil, agricoles et au poids-lourds, plus particulièrement des véhicules de génie civil dont les bandages sont soumis à des contraintes bien spécifiques, notamment les sols caillouteux sur lesquels ils roulent. Ainsi, avantageusement, le bandage pneumatique ou non pneumatique pourvu d'une bande de roulement comprenant une composition selon l'invention est un bandage de véhicule de génie civil, agricole ou poids lourds, de préférence de génie civil. Ces bandages sont pourvus de bandes de roulement qui présentent, par rapport aux épaisseurs des bandes de roulement des pneumatiques pour véhicules légers, en particulier pour véhicules tourisme ou camionnette, de grandes épaisseurs de matériau caoutchoutique. Typiquement la partie usante de la bande de roulement d'un bandage pour poids lourd présente une épaisseur d'au moins 15 mm, celle d'un véhicule génie civil d'au moins 30 mm, voire jusqu'à 120 mm. Ainsi, la bande de roulement du bandage selon l'invention présente avantageusement une ou plusieurs rainures dont la profondeur moyenne va de 15 à 120 mm, de préférence 65 à 120 mm.

Les bandages pneumatiques selon l'invention peuvent avoir un diamètre allant de 20 à 63 pouces, de préférence de 35 à 63 pouces.

Par ailleurs, le taux moyen de creux volumique sur l'ensemble de la bande de roulement du bandage selon l'invention peut être compris dans un domaine allant de 5 à 40 %, de préférence de 5 à 25 %.

L'invention a également pour objet une chenille en caoutchouc comprenant au moins un élément en caoutchouc comprenant une composition selon l'invention, l'au moins un élément en caoutchouc étant de préférence une courroie sans fin en caoutchouc ou une pluralité de patins en caoutchouc.

L'invention concerne les articles en caoutchouc précédemment décrits tant à l'état cru (c'est à dire, avant cuisson) qu'à l'état cuit (c'est à dire, après réticulation ou vulcanisation).

III-7 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomère, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui peut être réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme

couche de chargement de bande transporteuse. Ces produits peuvent ensuite être utilisés pour la fabrication de bandes transporteuses, selon les techniques connues de l'homme du métier.

La composition peut être soit à l'état cru (avant réticulation ou vulcanisation), soit à l'état cuit (après réticulation ou vulcanisation).

La réticulation de la composition peut être conduite de manière connue de l'homme du métier, par exemple à une température comprise entre 130°C et 200°C, sous pression.

**IV- MODES DE REALISATION PREFERES**

Au vu de ce qui précède, les réalisations préférées de l'invention sont décrites ci-dessous :

**1.** Composition de caoutchouc au moins à base de 10 à 90 pce d'un caoutchouc styrène-butadiène et de 10 à 90 pce d'un copolymère d'éthylène et de 1,3-diène, les unités éthylène dans le copolymère d'éthylène et de 1,3-diène représentant plus de 50% en mole des unités monomères du copolymère d'éthylène et de 1,3-diène, d'une charge renforçante et d'un système de réticulation.

**2.** Composition de caoutchouc selon la réalisation 1, dans laquelle les unités éthylène dans le copolymère d'éthylène et de 1,3-diène représentent entre 50% et 95% en mole des unités monomères du copolymère d'éthylène et de 1,3-diène.

**3.** Composition de caoutchouc selon l'une quelconque des réalisations précédentes, dans laquelle le 1,3-diène est le 1,3-butadiène.

**4.** Composition de caoutchouc selon l'une quelconque des réalisations précédentes, dans laquelle le copolymère d'éthylène et de 1,3-diène contient des unités de formule (I) ou des unités de formule (II) ou encore des unités de formule (I) et de formule (II).

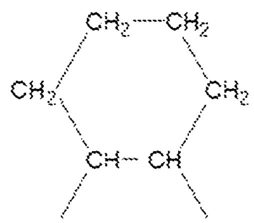

(I)

$$-CH2-CH(CH=CH2)- \qquad (II)$$

**5.** Composition de caoutchouc selon la réalisation 4, dans laquelle les pourcentages molaires des unités de formule (I) et des unités de formule (II) dans le copolymère d'éthylène et de 1,3-diène, respectivement o et p, satisfont à l'équation suivante (eq. 1), de manière préférentielle à l'équation (eq. 2), o et p étant calculés sur la base de l'ensemble des unités monomères du copolymère d'éthylène et de 1,3-diène.

$$0 < o+p \leq 25 \qquad \text{(eq. 1)}$$

$$0 < o+p < 20 \qquad \text{(eq. 2)}$$

**6.** Composition de caoutchouc selon l'une quelconque des réalisations précédentes, dans laquelle le copolymère présente une cristallinité inférieure à 20% de préférence inférieure à 15%, de préférence encore inférieure à 10%.

7. Composition de caoutchouc selon l'une quelconque des réalisations précédentes, dans laquelle le copolymère d'éthylène et de 1,3-diène est un copolymère statistique.

8. Composition de caoutchouc selon l'une quelconque des réalisations précédentes, dans laquelle le taux du copolymère d'éthylène et de 1,3-diène est compris dans un domaine allant de 20 à 80 pce, de préférence de 30 à 70 pce.

9. Composition de caoutchouc selon l'une quelconque des réalisations précédentes, dans laquelle le taux du caoutchouc styrène-butadiène est compris dans un domaine allant de 20 à 80 pce, de préférence de 30 à 70 pce.

10. Composition de caoutchouc selon l'une quelconque des réalisations précédentes, dans laquelle la somme du taux du copolymère d'éthylène et de 1,3-diène et du taux du caoutchouc styrène-butadiène est supérieure à 75 pce, de préférence supérieure à 90 pce.

**11.** Composition de caoutchouc selon l'une quelconque des réalisations précédentes, dans laquelle la charge renforçante comprend du noir de carbone, de la silice ou un de leurs mélanges.

**12.** Composition de caoutchouc selon l'une quelconque des réalisations précédentes, dans laquelle la charge renforçante comprend plus de 50% en poids, de préférence plus de 80% en poids de noir de carbone.

**13.** Composition de caoutchouc selon l'une quelconque des réalisations précédentes, dans laquelle la charge renforçante est exclusivement constituée de noir de carbone.

**14.** Composition de caoutchouc selon l'une quelconque des réalisations 11 à 13, dans laquelle la charge renforçante comprend plus de 50% en poids d'au moins un noir de carbone présentant une surface spécifique BET comprise dans un domaine allant de 60 à 160 $m^2/g$, de préférence de 70 à 130 $m^2/g$.

**15.** Composition de caoutchouc selon l'une quelconque des réalisations précédentes, dans laquelle le taux de la charge renforçante est compris dans un domaine allant de 10 à moins de 100 pce, de préférence de 15 à 90 pce.

**16.** Composition de caoutchouc selon l'une quelconque des réalisations 1 à 14, dans laquelle le taux de la charge renforçante est compris dans un domaine allant de 10 à moins de 49 pce, de préférence de 15 à 48 pce, de préférence encore de 20 à 47 pce.

**17.** Composition de caoutchouc selon l'une quelconque des réalisations précédentes, dans laquelle la fraction volumique de charge est inférieure à 19%, de préférence comprise dans un domaine allant de 10% à moins de 19%.

**18.** Composition de caoutchouc selon l'une quelconque des réalisations précédentes, la composition ne comprenant pas de résine plastifiante hydrocarbonée ou en comprenant moins de 10 pce, de préférence moins de 5 pce.

**19.** Composition de caoutchouc selon l'une quelconque des réalisations précédentes, la composition ne comprend pas de résine plastifiante hydrocarbonée.

**20.** Composition de caoutchouc selon l'une quelconque des réalisations précédentes, la composition ne comprenant pas de plastifiant liquide à 23°C ou en comprenant moins de 40 pce, de préférence moins de 30 pce.

**21.** Composition de caoutchouc selon l'une quelconque des réalisations 1 à 19, la composition comprenant un plastifiant liquide à 23°C, de préférence à taux compris dans un domaine allant de plus 0 à moins de 40 pce, de préférence de 2 à 30 pce.

**22.** Composition de caoutchouc selon la réalisation 20 ou 21, dans laquelle le plastifiant liquide à 23°C est choisi dans le groupe constitué par les huiles naphténiques, les huiles paraffiniques, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

**23.** Composition de caoutchouc selon la réalisation 20 ou 21, dans laquelle le plastifiant liquide à 23°C est choisi dans le groupe constitué par les huiles MES, les huiles TDAE, les huiles naphténiques, les huiles végétales et leurs mélanges.

**24.** Composition de caoutchouc selon l'une quelconque des réalisations précédentes, dans laquelle le système de réticulation est un système de vulcanisation à base de soufre moléculaire et/ou à base d'agent donneur de soufre.

**25.** Article de caoutchouc comprenant une composition telle que définie à l'une quelconque des réalisations 1 à 24, ledit article étant préférentiellement choisi dans le groupe constitué par les bandages pneumatiques, les bandages non pneumatiques, les chenilles et les bandes transporteuses.

**26.** Bande transporteuse (1) comprenant une couche de chargement (2), une couche de renforcement (3) et une couche d'entrainement (4), dans laquelle la couche de chargement (2) est constituée d'une composition de caoutchouc telle que définie à l'une quelconque des réalisations 1 à 24.

**27.** Chenille comprenant au moins un élément en caoutchouc comprenant une composition telle que définie à l'une quelconque des réalisations 1 à 24.

**28.** Chenille selon la réalisation 27, dans laquelle l'au moins un élément en caoutchouc est une courroie sans fin en caoutchouc ou une pluralité de patins en caoutchouc.

**29.** Bandage pneumatique ou non pneumatique pourvue d'une bande de roulement comprenant une composition telle que définie à l'une quelconque des réalisations 1 à 24, ledit bandage étant un bandage de véhicule hors la route choisi dans le groupe constitué par les véhicule de génie civil, agricole ou poids lourds, de préférence de génie civil.

**30.** Bandage selon la réalisation 29, dont la bande de roulement présente une ou plusieurs rainures dont la profondeur moyenne est comprise dans un domaine allant de 30 à 120 mm, de préférence de 45 à 75 mm.

**31.** Bandage selon l'une quelconque des réalisations 29 à 30, présentant un taux moyen de creux volumique sur l'ensemble de la bande de roulement compris dans un domaine allant de 5 à 40 %, de préférence de 5 à 25 % mm.

**32.** Bandage selon l'une quelconque des réalisations 29 à 31, présentant un diamètre compris dans un domaine allant de 20 à 63 pouces, de préférence de 35 à 63 pouces mm.

## IV- EXEMPLES

<u>IV-1 Mesures et tests utilisés</u>

*IV-1.1 Détermination de la microstructure des élastomères* :

La microstructure est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisantes. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Dans les deux cas (échantillon soluble ou échantillon gonflé). Pour la RMN du proton est utilisée une séquence simple impulsion de 30°. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

*IV-1.2 Détermination de la macrostructure des polymères par chromatographie d'exclusion stérique (SEC) :*

a) Principe de la mesure: La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère: Chaque échantillon est solubilisé dans du tétrahydrofurane à une concentration d'environ 1 g/L. Puis la solution est filtrée sur filtre de porosité 0.45μm avant injection.

c) Analyse SEC 3D : La masse molaire moyenne en nombre (Mn), la masse molaire moyenne en poids (Mw) et l'indice de polydispersité (Ip) des copolymère d'éthylène et de 1,3-diène (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration. La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min$^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 μL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur

de l'incrément d'indice de réfraction dn/dc de la solution de l'échantillon obtenue ci-dessus. Le logiciel d'exploitation des données chromatographiques est le système « ASTRA de Wyatt ».

La Mn, Mw et l'Ip des caoutchoucs styrène-butadiène ont été obtenus par chromatographie d'exclusion stérique (CES), avec le tetrahydrofuranne (THF) comme éluant à 1 ml/min. L'étalonnage est réalisé avec des étalons de polystyrène (PS) ayant des masses molaires comprises entre 1200 et 512800 g mol-1. La chaîne CES est équipée d'un détecteur RI Waters 2414 et un ensemble de 2 colonnes (Shodex KF-802.5 and KF-804) thermostatées à 35°C.

*IV-1.3 Détermination de la cristallinité*

La mesure de cristallinité se fait par mesure de l'enthalpie de fusion observée dans le cas des copolymères d'éthylène et de 1,3-diène. Ce phénomène endothermique est observé lors de l'analyse du thermogramme de la mesure DSC (Differential Scanning Calorimetry). La mesure se fait par balayage aller/retour de -150°C à 200°C sous atmosphère inerte (hélium) avec une rampe de 20°C/min.

Le signal correspondant au phénomène endothermique (fusion) est intégré et le taux de cristallinité est le rapport entre l'enthalpie mesurée et celle du polyéthylène parfaitement cristallin (290J/g).

%Cristallinité = (Enthalpie mesurée en J/g) / (enthalpie théorique d'un polyéthylène 100% cristallin en J/g).

*IV-1.4 Résistance à l'abrasion après cuisson*

Mesure de tenue à l'abrasion réalisé sur tambour tournant à 23°C selon la norme ISO 4649 (2017).

Le volume de gomme perdu lors du test est exprimé en $mm^3$. Plus ce volume est faible, plus la performance de résistance à l'abrasion est élevée.

*IV-1.5 Propriétés dynamiques après cuisson: Essai de traction*

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette.

Les essais d'allongement rupture (AR%) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa.

Toutes ces mesures de traction sont effectuées dans les conditions normales de température (23±2°C) et d'hygrométrie (50±5% d'humidité relative), selon la norme française NF T 40-101 (décembre 1979).

Les mesures ont été réalisées sur des éprouvettes réticulées ayant subi ou non une étape de vieillissement correspondant à un passage d'une durée de 48h, 96h, 120h ou 168h dans une étuve à une température de 140°C.

Les résultats sont présentés en base 100 par rapport au témoin. Un résultat supérieur à 100 indique une augmentation de la valeur concernée, c'est-à-dire une amélioration de l'allongement rupture.

*IV-1.6 Résistance à la propagation de fissure par fatigue après cuisson (Fatigue DeMattia)*

La tenue en fatigue DeMattia a été déterminée avec la méthode « propagation de fissures » selon la norme française ISO 132.

Les données récupérées sont le nombre de cycles nécessaires pour que l'entaille s'allonge de L0 mm à (L0 + 2) mm, de L0 mm à (L0 + 6) mm, et de L0 mm à (L0 + 10) mm.

Plus ce nombre de cycles est élevé, meilleure est la composition considérée en résistance à la fatigue.

IV-2 Synthèse des polymères

Dans la synthèse de polymères, tous les réactifs sont obtenus commercialement excepté les métallocènes. Le butyloctylmagnésium BOMAG (20% dans l'heptane, C = 0,88 $mol.L^{-1}$) provient de Chemtura et est stocké dans un tube de Schlenk sous atmosphère inerte. L'éthylène, de qualité N35, provient de la société Air Liquide et est utilisé sans purification préalable.

Le copolymère d'éthylène et de 1,3-butadiène : élastomère E1 (conforme à l'invention) est synthétisé selon le mode opératoire décrit ci-après.

Dans un réacteur contenant à 80°C du méthylcyclohexane, ainsi que de l'éthylène (Et) et du butadiène (Bd) dans les proportions indiquées dans le Tableau 1, on ajoute du butyloctylmagnésium (BOMAG) pour neutraliser les impuretés

du réacteur, puis le système catalytique (voir Tableau 1). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène (Bd) dans les proportions définies dans le Tableau 1. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le $[Me_2SiFlu_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le Tableau 1. Il est préparé selon une méthode de préparation conforme au paragraphe II.1 de la demande de brevet WO 2017/093654 A1.

La microstructure du copolymère E1 et ses propriétés figurent dans les Tableaux 2 et 3. Pour la microstructure, la Tableau 2 indique les taux molaires des unités éthylène (Eth), des unités du 1,3-butadiène, des motifs 1,2-cyclohexanediyle (cycle).

[Tableau 1]

| Synthèse | E1 |
|---|---|
| Concentration métallocène (mmol/L) | 0,07 |
| Concentration agent alkylant (mmol/L) | 0,33 |
| Ratio molaire monomère préformation/ métal Nd | 90 |
| Composition de l'alimentation (%mol Et/Bd) | 80/20 |

[Tableau 2]

| Elastomère | E1 |
|---|---|
| Et (%mol) | 79 |
| Bd (%mol) | 14 |
| 1,2-cyclohexanediyle (%mol) | 7 |

[Tableau 3]

| Elastomère | E1 |
|---|---|
| Tg (°C) | -41 |
| Mn (g/mol) | 130 700 |

IV-3 Préparation des compositions

Dans les exemples qui suivent, les compositions caoutchouteuses ont été réalisées comme décrit au point III.7 ci-dessus. En particulier, la phase « non-productive » a été réalisée dans un mélangeur de 3 litres pendant 5,5 minutes, pour une vitesse moyenne de palettes de 60 tours par minute jusqu'à atteindre une température maximale de tombée de 160°C. La phase « productive » a été réalisée dans un mélangeur de 3 litre pendant 3.5 minutes, pour une vitesse moyenne de palettes à 30 tours par minute, jusqu'à atteindre une température maximale de tombée de 90°C.

La réticulation de la composition a été conduite à une température comprise entre 130°C et 200°C, sous pression, de manière bien connue de l'homme du métier.

IV-4 Essais de compositions de caoutchouc

Les exemples présentés ci-dessous ont pour objet de comparer le compromis de performances entre la résistance à la propagation de fissure et l'allongement rupture ainsi qu'au maintien des performances d'allongement rupture dans le temps, d'une composition conforme à l'invention (C1) avec une composition témoin de l'art antérieur (T1).

La composition C1 se différencie de la composition T1 par la nature du second copolymère présent dans la matrice élastomère conjointement avec le copolymère de butadiène-styrène. L'élastomère de la composition T1 étant étendu à l'aide d'un plastifiant liquide, un taux correspondant de plastifiant liquide a été ajouté dans la composition C1.

Le Tableau 4 présente les compositions testées (en pce), et le Tableau 5 les résultats obtenus.

[Tableau 4]

| Composants | T1 | C1 |
|---|---|---|
| SBR(1) | 70 | 70 |
| EPDM(2) | 34,5 | - |
| EBR(3) | - | 30 |
| Plastifiant liquide(4) | | 4,5 |
| Noir de carbone(5) | 45 | 45 |
| Cire anti-ozone(6) | 2,5 | 2,5 |
| Antioxydant(7) | 3 | 3 |
| TMQ(8) | 3 | 3 |
| Acide stéarique | 1 | 1 |
| ZnO(9) | 5 | 5 |
| Soufre | 1,2 | 1,2 |
| Accélérateur (10) | 1,4 | 1,4 |

(1) ESBR « KER1502 » de la société Synthos
(2) EPDM étendu à 15% en poids huile (soit 4,5 pce dans la composition T1) ayant 54% en poids d'éthylène, 10% en poids de norbornene commercialisé sous la dénomination « Vistalon 8800 » par la société ExxonMobil
(3) Elastomère E1 préparé ci-dessus : Elastomère à 79% en mole d'unité éthylène, 7% en mole d'unité 1,2-cyclohexanediyle, 8% en mole de motif 1,2, 6% en mole de motif 1,4
(4) Plastifiant liquide « Primol 352 » de ka société ExxonMobil
(5) Noir de carbone de grade N234 selon la norme ASTM D-1765
(6) Cire anti-ozone « VARAZON 4959 » de la société Sasol Wax
(7) N-1,3-diméthylbutyl-N-phénylparaphénylènediamine « Santoflex 6-PPD » de la société Flexsys
(8) 2,2,4-triméthyl-1,2-dihydroquinoline de la société Flexys
(9) Oxyde de zinc de grade industriel de la société Umicore
(10) N-ter-butyl-2-benzothiazyle sulfénamide « Santocure TBBS » de la société Flexsys

[Tableau 5]

| Propriétés | T1 | C1 |
|---|---|---|
| Fatigue DeMattia L+2 *(nb de kilocycles)* | 2 006 | 3 330 |
| Fatigue DeMattia L+6 *(nb de kilocycles)* | 5 850 | 10 000 |
| Fatigue DeMattia L+10 *(nb de kilocycles)* | 12 083 | 24 786 |
| AR (%) initial *(base 100)* | 100 | 112 |
| AR (%) 48h 140°C *(base 100)* | 100 | 116 |
| AR (%) 96h 140°C *(base 100)* | 100 | 150 |
| AR (%) 120h 140°C *(base 100)* | 100 | 181 |
| AR (%) 168h 140°C *(base 100)* | 100 | 1540 |

Les résultats présentés dans le Tableau 5 ci-dessus montrent que la substitution d'un EPDM de l'art antérieur par un copolymère d'éthylène et de 1,3-diène conforme à l'invention permet d'améliorer à la fois la résistance à la propagation de fissure et les propriétés mécaniques de la composition de caoutchouc comprenant un copolymère de butadiène-styrène. En particulier, il a été observé que les propriétés d'allongement rupture de la composition conforme à l'invention sont maintenues dans le temps beaucoup plus efficacement que la composition témoin. Enfin, la Demanderesse a constaté que l'amélioration des propriétés précitées a été obtenue tout en conservant une résistance à l'abrasion acceptable, voire inchangée par rapport à la composition témoin.

Ainsi, la composition conforme à l'invention est particulièrement intéressante pour constituer différents articles en caoutchouc tels que des bandes transporteuses.

## Revendications

1. Composition de caoutchouc au moins à base de 10 à 90 pce d'un caoutchouc styrène-butadiène et de 10 à 90 pce d'un copolymère d'éthylène et de 1,3-diène, les unités éthylène dans le copolymère représentant plus de 50% en mole des unités monomères du copolymère, d'une charge renforçante et d'un système de réticulation.

2. Composition de caoutchouc selon la revendication 1, dans laquelle les unités éthylène dans le copolymère représentent entre 50% et 95% en mole des unités monomères du copolymère.

3. Composition de caoutchouc selon l'une quelconque des revendications précédentes, dans laquelle le 1,3-diène est le 1,3-butadiène.

4. Composition de caoutchouc selon l'une quelconque des revendications précédentes, dans laquelle le copolymère contient des unités de formule (I) ou des unités de formule (II) ou encore des unités de formule (I) et de formule (II).

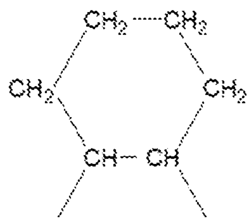

(I)

-CH2-CH(CH=CH2)- (II)

5. Composition de caoutchouc selon l'une quelconque des revendications précédentes, dans laquelle le copolymère présente une cristallinité inférieure à 20% de préférence inférieure à 15%, de préférence encore inférieure à 10%.

6. Composition de caoutchouc selon l'une quelconque des revendications précédentes, dans laquelle le copolymère d'éthylène et de 1,3-diène est un copolymère statistique.

7. Composition de caoutchouc selon l'une quelconque des revendications précédentes, dans laquelle le taux du copolymère d'éthylène et de 1,3-diène est compris dans un domaine allant de 20 à 80 pce, de préférence de 30 à 70 pce, et le taux du caoutchouc styrène-butadiène est compris dans un domaine allant de 20 à 80 pce, de préférence de 30 à 70 pce.

8. Composition de caoutchouc selon l'une quelconque des revendications précédentes, dans laquelle la somme du taux du copolymère d'éthylène et de 1,3-diène et du taux du caoutchouc styrène-butadiène est supérieure à 75 pce, de préférence supérieure à 90 pce.

9. Composition de caoutchouc selon l'une quelconque des revendications précédentes, dans laquelle la charge renforçante comprend du noir de carbone, de la silice ou un de leurs mélanges.

10. Composition de caoutchouc selon l'une quelconque des revendications précédentes, la composition ne comprenant pas de résine plastifiante hydrocarbonée ou en comprenant moins de 10 pce, de préférence moins de 5 pce.

11. Composition de caoutchouc selon l'une quelconque des revendications 1 à 9, la composition comprenant un plastifiant liquide à 23°C, de préférence à taux compris dans un domaine allant de plus 0 à moins de 40 pce, de préférence de 2 à 30 pce.

12. Composition de caoutchouc selon la revendication 11, dans laquelle le plastifiant liquide à 23°C est choisi dans le groupe constitué par les huiles naphténiques, les huiles paraffiniques, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

**13.** Composition de caoutchouc selon l'une quelconque des revendications précédentes, dans laquelle le système de réticulation est un système de vulcanisation à base de soufre moléculaire et/ou à base d'agent donneur de soufre.

**14.** Article de caoutchouc comprenant une composition telle que définie à l'une quelconque des revendications 1 à 13, ledit article étant préférentiellement choisi dans le groupe constitué par les bandages pneumatiques, les bandages non pneumatiques, les chenilles et les bandes transporteuses.

**15.** Bande transporteuse (1) comprenant une couche de chargement (2), une couche de renforcement (3) et une couche d'entrainement (4), dans laquelle la couche de chargement (2) est constituée d'une composition de caoutchouc telle que définie à l'une quelconque des revendications 1 à 13.

**Patentansprüche**

**1.** Kautschukzusammensetzung auf der Basis von zumindest 10 bis 90 phe eines Styrol-Butadien-Kautschuks und 10 bis 90 phe eines Ethylen-1,3-Dien-Copolymers, wobei die Ethyleneinheiten in dem Copolymer mehr als 50 Mol-% der Monomereinheiten des Copolymers ausmachen, einem verstärkenden Füllstoff und einem Vernetzungssystem.

**2.** Kautschukzusammensetzung nach Anspruch 1, wobei die Ethyleneinheiten in dem Copolymer zwischen 50 und 95 Mol-% der Monomereinheiten des Copolymers ausmachen.

**3.** Kautschukzusammensetzung nach einem der vorhergehenden Ansprüche, wobei es sich bei dem 1,3-Dien um 1,3-Butadien handelt.

**4.** Kautschukzusammensetzung nach einem der vorhergehenden Ansprüche, wobei das Copolymer Einheiten der Formel (I) oder Einheiten der Formel (II) oder auch Einheiten der Formel (I) und Formel (II) enthält.

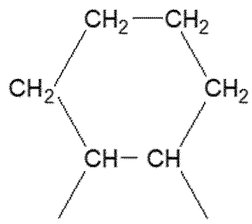

(I)

$-CH_2-CH(CH=CH_2)-$ (II)

**5.** Kautschukzusammensetzung nach einem der vorhergehenden Ansprüche, wobei das Copolymer eine Kristallinität von weniger als 20 %, bevorzugt weniger als 15 %, weiter bevorzugt weniger als 10 %, aufweist.

**6.** Kautschukzusammensetzung nach einem der vorhergehenden Ansprüche, wobei es sich bei dem Ethylen-1,3-Dien-Copolymer um ein statistisches Copolymer handelt.

**7.** Kautschukzusammensetzung nach einem der vorhergehenden Ansprüche, wobei der Gehalt an Ethylen-1,3-Dien-Copolymer im Bereich von 20 bis 80 phe, bevorzugt von 30 bis 70 phe, liegt, und der Gehalt an Styrol-Butadien-Kautschuk im Bereich von 20 bis 80 phe, vorzugsweise von 30 bis 70 phe, liegt.

**8.** Kautschukzusammensetzung nach einem der vorhergehenden Ansprüche, wobei die Summe des Gehalts an Ethylen-1,3-Dien-Copolymer und des Gehalts an Styrol-Butadien-Kautschuk größer als 75 phe, bevorzugt größer als 90 phe, ist.

**9.** Kautschukzusammensetzung nach einem der vorhergehenden Ansprüche, wobei der verstärkende Füllstoff Ruß, Kieselsäure oder Mischungen davon umfasst.

**10.** Kautschukzusammensetzung nach einem der vorhergehenden Ansprüche, wobei die Zusammensetzung kein Kohlenwasserstoff-Weichmacherharz oder weniger als 10 phe, bevorzugt weniger als 5 phe, Kohlenwasserstoff-Weichmacherharz umfasst.

**11.** Zusammensetzung nach einem der Ansprüche 1 bis 9, wobei die Zusammensetzung einen bei 23 °C flüssigen Weichmacher umfasst, vorzugsweise in einem Gehalt in einem Bereich von mehr als 0 bis weniger als 40 phe, bevorzugt von 2 bis 30 phe.

**12.** Kautschukzusammensetzung nach Anspruch 11, wobei der bei 23 °C flüssige Weichmacher aus der Gruppe bestehend aus naphthenischen Ölen, Paraffinölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen davon ausgewählt ist.

**13.** Kautschukzusammensetzung nach einem der vorhergehenden Ansprüche, wobei es sich bei dem Vernetzungssystem um ein Vulkanisationssystem auf Basis von molekularem Schwefel und/oder auf Basis eines Schwefeldonators handelt.

**14.** Kautschukgegenstand, umfassend eine Zusammensetzung gemäß einem der Ansprüche 1 bis 13, wobei der Gegenstand vorzugsweise aus der Gruppe bestehend aus Luftreifen, Vollreifen, Ketten und Transportbändern ausgewählt ist.

**15.** Förderband (1), umfassend eine Tragschicht (2), eine Verstärkungsschicht (3) und eine Laufschicht (4), wobei die Tragschicht (2) aus einer Kautschukzusammensetzung gemäß einem der Ansprüche 1 bis 13 besteht.

## Claims

**1.** Rubber composition at least based on 10 to 90 phr of a styrene-butadiene rubber and 10 to 90 phr of a copolymer of ethylene and 1,3-diene, the ethylene units in the copolymer representing more than 50 mol% of the monomer units of the copolymer, on a reinforcing filler and on a crosslinking system.

**2.** Rubber composition according to Claim 1, wherein the ethylene units in the copolymer represent between 50 mol% and 95 mol% of the monomer units of the copolymer.

**3.** Rubber composition according to either one of the preceding claims, in which the 1,3-diene is 1,3-butadiene.

**4.** Rubber composition according to any one of the preceding claims, wherein the copolymer contains units of formula (I) or units of formula (II) or else units of formula (I) and of formula (II).

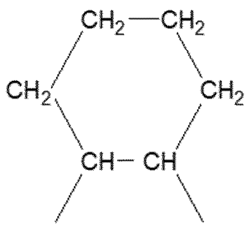

(I)

$$-CH_2-CH(CH=CH_2)- \qquad (II)$$

**5.** Rubber composition according to any one of the preceding claims, wherein the copolymer has a crystallinity of less than 20%, preferably less than 15%, more preferably less than 10%.

**6.** Rubber composition according to any of the preceding claims, wherein the copolymer of ethylene and 1,3-diene is a random copolymer.

**7.** Rubber composition according to any one of the preceding claims, wherein the content of the copolymer of ethylene and 1,3-diene is in a range extending from 20 to 80 phr, preferably from 30 to 70 phr, and the content of styrene-butadiene rubber is within a range extending from 20 to 80 phr, preferably from 30 to 70 phr.

**8.** Rubber composition according to any one of the preceding claims, wherein the sum of the content of the copolymer of ethylene and 1,3-diene and the content of the styrene-butadiene rubber is greater than 75 phr, preferably greater than 90 phr.

**9.** Rubber composition according to any one of the preceding claims, in which the reinforcing filler comprises carbon black, silica or a mixture thereof.

**10.** Rubber composition according to any one of the preceding claims, which composition does not comprise any hydrocarbon-based plasticizing resin or comprises less than 10 phr thereof, preferably less than 5 phr thereof.

**11.** Rubber composition according to any one of claims 1 to 9, which composition comprises a plasticizer that is liquid at 23°C, preferably in a content within a range extending from more than 0 to less than 40 phr, preferably from 2 to 30 phr.

**12.** Rubber composition according to Claim 11, wherein the plasticizer that is liquid at 23°C is selected from the group consisting of naphthenic oils, paraffinic oils, MES oils, TDAE oils, RAE oils, TRAE oils, SRAE oils, mineral oils, vegetable oils, ether plasticizers, ester plasticizers, phosphate plasticizers, sulfonate plasticizers and mixtures thereof.

**13.** Rubber composition according to any one of the preceding claims, wherein the crosslinking system is a vulcanization system based on molecular sulfur and/or based on a sulfur-donating agent.

**14.** Rubber article comprising a composition as defined in any one of Claims 1 to 13, said article preferentially being selected from the group consisting of pneumatic tyres, non-pneumatic tyres, caterpillar tracks and conveyor belts.

**15.** Conveyor belt (1) comprising a loading layer (2), a reinforcement layer (3) and a drive layer (4), in which the loading layer (2) consists of a rubber composition as defined in any one of claims 1 to 13.

[Fig. 1]

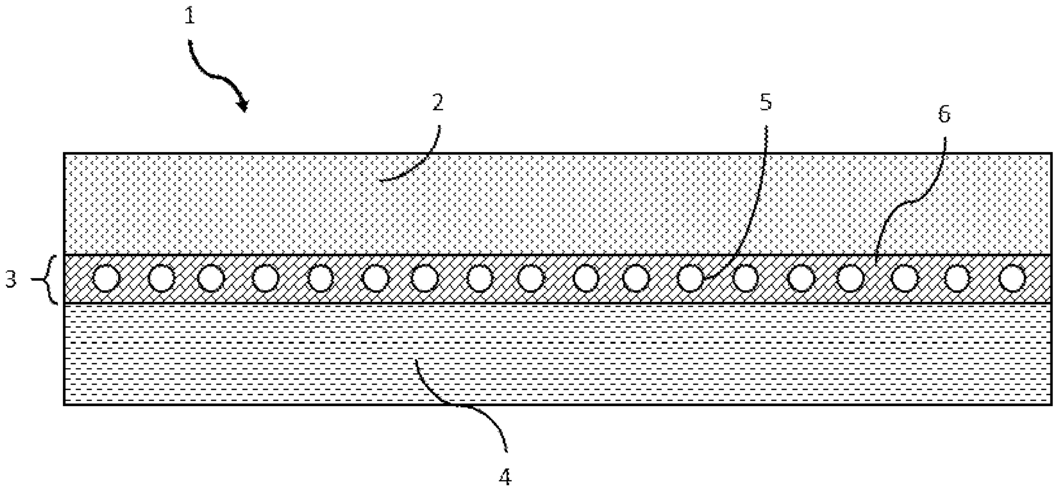

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2017019235 A1
- EP 1092731 A
- WO 2004035639 A
- WO 2007054223 A
- WO 2007054224 A
- WO 2017093654 A1
- WO 2018020122 A1
- WO 2018020123 A1
- WO 9736724 A2
- WO 9916600 A1
- WO 03016215 A1
- WO 03016387 A1
- WO 9736724 A
- WO 9916600 A
- EP 0501227 A
- EP 0735088 A
- EP 0810258 A
- WO 0005300 A
- WO 0005301 A